# EUROPEAN PATENT APPLICATION

(11) **EP 4 696 730 A1**
(43) Date of publication of application: **18.02.2026**
(21) Application number: 24194928.8
(22) Date of filing: 16.08.2024
(51) Int. Cl.: C08G 59/22, C08G 59/50, C08G 59/54, C09J 163/00

(54) **A THERMALLY DEBONDABLE TWO-COMPONENT EPOXY ADHESIVE COMPOSITION**

(71) Applicant: Henkel AG & Co. KGaA, 40589 Düsseldorf (DE)
(72) Inventor: Migliore, Nicola, 40227 Düsseldorf (DE); Kohlstrung, Rainer, 68723 Plankstadt (DE)

(57) **Abstract**

The present invention relates to a thermally debondable two-component epoxy adhesive composition comprising a first part comprising an epoxy resin; a mixture of two or more reactive diluents; and thermally expandable thermoplastic microspheres; and a second part comprising mixture of three or more curing agents consisting of at least one compound possessing at least two epoxide reactive groups per molecule; an accelerator; and, a catalyst, wherein the first part and the second part are mixed in epoxy:NH₂ equivalent ratio of from 0.95:1 to 1:0.95.

## Description

### Technical field of the invention

The present invention relates to a thermally debondable two-component epoxy adhesive composition, which is particularly suitable for use in e-mobility related components.

### Background of the invention

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature might be effective but can be time consuming and complex to perform: moreover, the aggressive chemicals and/or harsh conditions required can damage the substrates being separated, rendering them unsuitable for subsequent applications.

As an exemplary case, it is evidently desirable to remove, replace and / or recycle components of automotive industry, such as electric car battery cells and casque, which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes or the application of chemicals.

Certain authors have sought to develop debondable adhesive compositions wherein the applied heat is used to disrupt the bonding at the interface of the adhesive and the substrate. The problem with the thermal debonding is that if a care is not taken, high temperatures may damage the substrates.

Noting these problems, certain authors have also sought to develop debondable adhesive compositions, wherein the passage of an electrical current through the cured compositions acts to disrupt the bonding at the interface of the adhesive and the substrate.

Also, water-based systems and UV activated acrylates have been used in the past as debonding adhesive layers. However, despite of the good debonding efficacy, the adhesion strength at room temperature, the poor adhesion on substrates like PP, PET or e-coated steel, and the poor compatibility with polyurethane thermal conductive adhesive were found dissatisfactory.

Therefore, there remains a need in the art to provide means to effectively debond bonded substrates, especially bonded structures in batteries of electronic vehicles and consumer electronics, while maintaining optimum adhesion and mechanical properties of the adhesive.

### Summary of the invention

The present invention relates to a thermally debondable two-component epoxy adhesive composition comprising a first part comprising an epoxy resin; a mixture of two or more reactive diluents; and thermally expandable thermoplastic microspheres; and a second part comprising a mixture of three or more curing agents consisting of at least one compound possessing at least two epoxide reactive groups per molecule; an accelerator; and, a catalyst, wherein the first part and the second part are mixed in epoxy:NH₂ equivalent ratio of from 0.95:1 to 1 :0.95.

The present invention also relates to a cured thermally debondable two-part epoxy composition according to the present invention.

The present invention encompasses use of thermally debondable two-part epoxy composition and cured product according to the present invention in a bonded structure.

The present invention also encompasses a bonded structure comprising: a first substrate; a second substrate; a thermally debondable two-part epoxy composition layer or cured product layer according to the present invention; and an adhesive layer, wherein the thermally debondable two-part epoxy composition is disposed on a surface of the first substrate and/or on a surface of the second substrate and wherein the adhesive layer is placed on top of the thermally debondable two-part epoxy composition layer, wherein the adhesive layer is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

The present invention relates to a method of debonding said bonded structure according to the present invention, the method comprising the steps of: i) applying a heat; and, ii) debonding the surfaces, wherein the temperature applied in step i) is preferably from 60 to 200°C, more preferably from 100 to 180 °C, and even more preferably from 130 to 160°C, and it is preferably applied for a duration of from 7 seconds to 60 minutes.

### Short summary of the figures

Figure 1 illustrates tensile lap shear strength of the composition according to the present invention in combination with TEROSON EP5065 on Al3003 after 50 days of aging.
Figure 2 illustrates tensile lap shear strength of TEROSON EP5065 and the composition according to the present invention on e-coated steel.
Figure 3 illustrates tensile shear strength of LOCTITE UK2073/2173 in combination with the composition according to the present invention on plastic substrates.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

As used herein, the term *"consisting of"* excludes any element, ingredient, member or method step not specified.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

As used herein, the term *"one component (1K) composition"* refers to a composition where, during storage of the composition, the composition components are all admixed together but the properties of the composition, including viscosity, remain consistent enough over the time of storage to permit successful utility of the composition at a later time.

*"Two-component (2K) compositions"* are understood to be compositions in which a first component/part and a second component/part must be stored in separate vessels because of their (high) reactivity. The two components/parts are mixed only shortly before application and then react, typically without additional activation, with bond formation and thereby formation of a polymeric network. Herein higher temperatures may be applied in order to accelerate the cross-linking reaction.

As used herein, room temperature is 23°C plus or minus 2°C. As used herein, *"ambient conditions"* means the temperature and pressure of the surroundings in which the composition is located or in which a coating layer or the substrate of said coating layer is located.

As used herein the term *"debondable"* means that, after curing of the adhesive, the bond strength can be weakened by at least 50% upon application of temperature of from 60 to 200 °C for a duration of from 15 seconds to 60 minutes. Bond strength is measured by Tensile Lap Shear (TLS) test performed at room temperature and based upon EN 1465:2009 (German version) Based on Adhesives - Determination of tensile lap-shear strength of bonded assemblies.

As used herein, the term *"epoxide"* denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term *"monoepoxide compound"* is meant to denote epoxide compounds having one epoxy group. The term *"polyepoxide compound"* is meant to denote epoxide compounds having at least two epoxy groups. The term *"diepoxide compound"* is meant to denote epoxide compounds having two epoxy groups.

The epoxide may be unsubstituted but may also be inertly substituted. Exemplary inert substituents include chlorine, bromine, fluorine, and phenyl.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a thermally debondable two-component epoxy adhesive composition comprising a first part comprising an epoxy resin; a mixture of two or more reactive diluents; and thermally expandable thermoplastic microspheres; and a second part comprising mixture of three or more curing agents consisting of at least one compound possessing at least two epoxide reactive groups per molecule; an accelerator; and, a catalyst, wherein the first part and the second part are mixed in epoxy:NH₂ equivalent ratio of from 0.95:1 to 1 :0.95.

The Applicant has found out that the composition according to the present invention has an increased (130-150°C) activation temperature for battery applications, while not adversely affecting the battery performance. The composition according to the present invention has good adhesion on various substrates such as metals, e-coated metal, PET and pretreated PP, and good adhesion to other adhesives such as thermally conductive polyurethane adhesive. Further, the composition according to the present invention has significant reduction on bond strength after the heat activation, and therefore, debond easily and debonded parts are easy to clean. The composition according to the present invention also provides a thermal isolation effect, and therefore, may protect the substrate to be debonded against heat during debonding. Finally, the composition according to the present invention has improved aging and stability performance.

The first part of the thermally debondable two-component epoxy adhesive composition according to the present invention comprises an epoxy resin. The epoxy resin adheres the composition according to the present invention to the substrate and binds the composition components together, while ensures the mechanical and chemical stability.

Epoxy resins as used herein may include mono-functional epoxy resins, multi- or poly-functional epoxy resins, and combinations thereof. The epoxy resins may be pure compounds but equally may be mixtures epoxy functional compounds, including mixtures of compounds having different numbers of epoxy groups per molecule. An epoxy resin may be saturated or unsaturated, aliphatic, cycloaliphatic, aromatic or heterocyclic and may be substituted. Further, the epoxy resin may also be monomeric or polymeric.

Without intention to limit the present invention, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis, trans-limonene oxide, (-)-cis, trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (I) herein below: 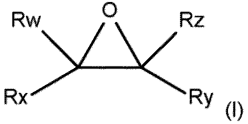 wherein: R^{w}, R^{x}, R^{y} and R^{z} may be the same or different and are independently selected from hydrogen, a halogen atom, a C₁-C₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₈ alkyl group and, more preferably, a C₁-C₄ alkyl group.

Having regard to this embodiment, exemplary monoepoxides include ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and styrene oxide.

In the present invention, reference is made to using at least one monoepoxide compound selected from the group consisting of: ethylene oxide; propylene oxide; cyclohexene oxide; (+)-cis-limonene oxide; (+)-cis, trans-limonene oxide; (-)-cis, trans-limonene oxide; cyclooctene oxide; and, cyclododecene oxide.

Again, without intention to limit the present invention, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a cost standpoint, as in their production, lower molecular weight epoxy resins require more limited processing in purification.

As examples of types or groups of polyepoxide compounds which may be polymerized in present invention, mention may be made of: glycidyl ethers of polyhydric alcohols and polyhydric phenols; glycidyl esters of polycarboxylic acids; and epoxidized polyethylenically unsaturated hydrocarbons, esters, ethers and amides.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and limonene diepoxide.

Further illustrative polyepoxide compounds include but are not limited to glycerol polyglycidyl ether; trimethylolpropane polyglycidyl ether; pentaerythritol polyglycidyl ether; diglycerol polyglycidyl ether.

Preferably, the epoxy resin is selected from the group consisting of bis-phenol A epoxy resin, bis-phenol F epoxy resin, mixture of bis-phenol A epoxy resin and bis-phenol F epoxy resin, cycloaliphatic epoxy resin and mixtures thereof, more preferably said epoxy resin is bis-phenol A epoxy resin.

Bis-phenol A epoxy resin is preferred because it provides good adhesion properties to metals.

Suitable commercially available epoxy resins for use in the present invention include but are not limited to D.E.R. 331 from Olin, Epikote 828 from Westlake, Araldite GY 250 from Huntsman and Epotohoto YD 128 from Tohoto Kasei.

The epoxy resin may be present in an amount from 5 to 40% by weight of the total weight of the first part of the composition, preferably from 6 to 35%, more preferably from 7 to 30% and even more preferably from 7 to 20%.

These epoxy resin quantities are preferred because quantity greater than 40% may adversely have an effect on adhesion properties and flexibility of the composition, whereas low quantities, mainly below 5% may lead to higher shrinkage.

The first part of the thermally debondable two-component epoxy adhesive composition according to the present invention comprises a mixture of two or more reactive diluents. The reactive diluent reduces the viscosity of the composition to ease its processability, without adversely affecting adhesion performance.

Suitable reactive diluent for use in the present invention can be selected from the group consisting of is selected from the group consisting of 2-{3-[(8E,11E)-pentadeca-8,11-dien-1-yl]phenoxymethyl}oxirane, glycidyl ether, cresyl glycidyl ether, polyethylene glycol glycidyl ether, polypropylene glycol glycidyl ether, butyl glycidyl ether, 2,2,4-trimethylpentyl glycidyl ether, phenyl glycidyl ether, cyclohexanedimethanol glycidyl ether, p-t-butyl phenyl glycidyl ether, neopentyl glycol di-glycidyl ether, cyclohexanedimethanol glycidyl ether, 1,4-butanediol diglycidyl ether, cardolite, C12-C14 alcohol glycidyl ether, and mixtures thereof, preferable the reactive diluent is a mixture of 2-{3-[(8E,11E)-pentadeca-8,1 1-dien-1-yl]phenoxymethyl}oxirane and 1 ,4-butanediol diglycidyl ether.

The above listed reactive diluents such as monofunctional and difunctional epoxy and oxirane monomers are liable not only to reduce the viscosity but also to contribute to fine tuning of adhesive properties as per the application needs.

1,4-butanediol diglycidyl ether and 2-{3-[(8E,11E)-pentadeca-8,11-dien-1-yl]phenoxymethyl}oxirane are particularly preferred because of their low viscosity, high glass transition temperature (Tg) and they improve chemical resistance.

Suitable commercially available reactive diluents for use in the present invention include but are not limited to EPODIL 750 from Evonik, RP 46 from BASF, Heloxy Modifier 67 from Westlake and Erisys GE 21 from Huntsman.

The reactive diluent may be present in an amount from 8 to less than 35% by weight of the total weight of the first part of the composition, preferably from 10 to less than 33%, and more preferably from 15 to less than 31%.

These reactive diluent quantities are preferred because too high quantities, more than 35%, may lead to too soft matrix, and therefore, have negative effect on debonding properties, whereas too low quantities, less than 8%, may lead to too stiff matrix, and therefore, have negative effect on debonding properties.

The first part of the thermally debondable two-component epoxy adhesive composition according to the present invention comprises thermally expandable thermoplastic microspheres. Thermally expandable thermoplastic microspheres expand upon exposure to elevated temperature and by expanding, they enable the debonding effect.

Suitable thermally expandable thermoplastic microspheres have a core-shell structure, and wherein the shell is formed from cross-linked polymer and the core is composed of a blowing agent.

Suitable cross-linked polymer may be prepared by (co)polymerization of any suitable monomers or comonomers. Suitable monomer that can be used for preparing the polymer includes non-ionic ethylenically unsaturated monomers.

Suitable non-ionic ethylenically unsaturated monomers for use in the present invention can be selected from the group consisting of styrene, vinyltoluene, ethylene, butadiene, vinyl acetate, vinyl chloride, vinylidene chloride, acrylonitrile, acrylamide, methacrylamide, C1-C20 alkyl or C2-C20 alkenyl esters of acrylic or methacrylic acid, methacrylate, methyl methacrylate, ethyl acrylate, ethyl methacrylate, butyl acrylate, butyl methacrylate, 2-ethylhexyl acrylate, 2-ethylhexyl methacrylate, benzyl acrylate, benzyl methacrylate, lauryl acrylate, lauryl methacrylate, oleyl acrylate, oleyl methacrylate, palmityl acrylate, palmityl methacrylate, stearyl acrylate, stearyl methacrylate, hydroxyl-containing monomers, in particular C1-C10 hydroxyalkyl (meth)acrylates, such as hydroxyethyl (meth)acrylate, hydroxypropyl (meth)acrylate, glycidyl (meth)acrylate, preferably methyl methacrylate and mixtures thereof.

Suitable polymer may also be a copolymer prepared by the copolymerization of two or more monomers listed above. Preferred monomer combinations include acrylonitrile/methyl (meth)acrylate, styrene/methyl (meth)acrylate, acrylamide/methyl (meth)acrylate, acrylonitrile/hydroxyethyl (meth)acrylate. More preferably combination is acrylonitrile/methyl methacrylate.

Suitable crosslinking agents for use in the present invention for the crosslinking of the polymer are compounds having two or more ethylenically unsaturated groups, for example diacrylates or dimethacrylates of at least dihydric saturated alcohols, e.g., ethylene glycol diacrylate, ethylene glycol dimethacrylate, 1 ,2-propylene glycol diacrylate, 1 ,2-propylene glycol dimethacrylate, 1 ,4-butanediol diacrylate, 1 ,4-butanediol dimethacrylate, hexanediol diacrylate, hexanediol dimethacrylate, neopentylglycol diacrylate, neopentylglycol dimethacrylate, 3-methylpentanediol diacrylate and 3-methylpentanediol dimethacrylate. A further class of crosslinkers comprises diacrylates or dimethacrylates of polyethylene glycols or polypropylene glycols having molecular weights of 200 to 9000 in each case. Polyethylene and/or polypropylene glycols used for preparing the diacrylates or dimethacrylates preferably have a molecular weight of 400 to 2000 each. Not only the homopolymers of ethylene oxide and/or propylene oxide can be used, but also block copolymers of ethylene oxide and propylene oxide, or random copolymers of ethylene oxide and propylene oxide, which comprise a random distribution of the ethylene oxide and propylene oxide units. Similarly, the oligomers of ethylene oxide and/or propylene oxide are useful for preparing the crosslinkers, examples being diethylene glycol diacrylate, diethylene glycol dimethacrylate, triethylene glycol diacrylate, triethylene glycol dimethacrylate, tetraethylene glycol diacrylate and/or tetraethylene glycol dimethacrylate.

Crosslinkers are preferably used in amounts of 0.1 to 30 wt%, based on the monomers to be polymerized in any one stage.

The core is preferably composed of physical blowing agent. Suitable physical blowing agent includes alkanes and/or cycloalkanes with at least 4 carbon atoms, dialkyl ethers, esters, ketones, acetals, fluoroalkanes with 1 to 8 carbon atoms, and tetraalkylsilanes with 1 to 3 carbon atoms in the alkyl chain, in particular tetramethylsilane.

Examples of suitable blowing agents usable according to the invention, propane, n-butane, iso- and cyclobutane, n-, iso- and cyclopentane, cyclohexane, dimethyl ether, methyl ethyl ether, methyl butyl ether, methyl formate and acetone may be mentioned, and also fluoroalkanes which can be degraded in the troposphere and thus are harmless to the ozone layer, such as trifluoromethane, difluoromethane, 1,1,1,3,3-pentafluorobutane, 1,1,1,3,3-pentafluoropropane, 1,1,1,2-tetrafluoroethane, difluoroethane and 1,1,1,2,3,3,3-heptafluoropropane, and perfluoroalkanes such as CsFs, C₄F₁₀, C₅F₁₂, CeFi4 and C₇F₁₆. Said blowing agents can be used alone or in any combination with one another.

Further, hydrofluoro olefins, such as 1,3,3,3-tetrafluoropropene, or hydrochlorofluoro olefins, such as 1-chloro-3,3,3-trifluoropropene, can be used as blowing agents.

In a preferred embodiment, the physical blowing agents are hydrocarbons, preferably, selected from the group consisting of alkanes and/or cycloalkanes with at least 4 carbon atoms. In particular, pentanes, preferably isopentane and cyclopentane, are used. With the use of the rigid foams as insulation in cooling appliances, cyclopentane is preferred. The hydrocarbons can be used in mixture with water.

The thermally expandable microspheres can be prepared by seed swelling of the crosslinked polymer and encapsulation of the blowing agents.

The thermally expandable thermoplastic microspheres have a particle size from 5 to 100 µm, preferably from 8 to 75 µm, preferably from 9 to 50 µm, more preferably from 10 to 30 µm, more preferably from 12 to 20 µm, and even more preferably from 13 to 19 µm, wherein the particle size is measure by laser diffraction (Low Angle Laser Light Scattering LALLS).

The above-defined particle size ranges are sizes before the expansion.

The thermally expandable thermoplastic microspheres expand when they are exposed to a heat, preferably when exposed to a heat of from 60 to 200°C, preferably from 100 to 180 °C, more preferably from 130 to 150°C.

The heat source may be for example a thermal source, a sonication probe or an electromagnetic source.

Suitable commercially available thermally expandable thermoplastic microspheres for use in the present invention include but is not limited to Expancel 920DU40 from Nouryon.

The thermally expandable thermoplastic microspheres may be present in the thermally debondable two-component epoxy adhesive composition according to the present invention in a quantity of from 15 to 40% by weight based on the total weight of the composition, preferably from 20 to 35% and more preferably from 24 to 32%.

The above defined and preferred ranges are ideal to break the bond line while maintaining low solid content in the composition. Quantities less than 15% may not lead to a complete bond break, whereas too high quantities may increase the solid content too high without providing any additional technical benefit.

The first part and/or the second part of the thermally debondable two-component epoxy adhesive composition according to the present invention may optionally comprise a toughener. The toughener improves the toughness of the composition according to the present invention.

In a highly preferred embodiment, the first part of the composition of the present invention contains at least one toughener selected from: epoxy- elastomer adducts; and toughening rubber in the form of core-shell particles dispersed in the epoxy resin matrix.

In another highly preferred embodiment, the first part of the composition of the present invention contains at least one toughening rubber in the form of core-shell particles dispersed in the epoxy resin matrix.

Elastomer-containing adducts may be used individually or a combination of two or more particular adducts. Moreover, each adduct may independently be selected from solid adducts or liquid adducts at a temperature of 23°C. Typically, useful adducts will be characterized by a ratio by weight of epoxy to elastomer of from 1:5 to 5:1, for example from 1:3 to 3:1. An instructive reference regarding suitable epoxy / elastomer adducts is US Patent Publication 2004/0204551. Moreover, exemplary commercial epoxy/elastomer adducts for use herein include but are not limited to: HYPDX RK8-4 commercially available from CVC Chemical; and B-Tough A3 available from Croda Europe Limited. The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0⁰C and preferably a glass transition temperature (T_{g}) of -20⁰C or lower, more preferably -40⁰C or lower and even more preferably -60⁰C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly, without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have an average particle size (d50) of from 10nm to 300nm, for example from 50 nm to 250 nm: said particle size refers to the diameter or largest dimension of a particle in a distribution of particles and is measured via dynamic light scattering. For completeness, the present application does not preclude the presence of two or more types of core shell rubber (CSR) particles with different particle size distributions in the composition to provide a balance of key properties of the resultant cured product, including shear strength, peel strength and resin fracture toughness.

Suitable commercially available core-shell rubber particles for use in the present invention include but are not limited to Paraloid EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 153, MX 551, MX553; and, METABLEN SX-006 available from Mitsubishi Rayon.

The toughener may be present in the first part of the thermally debondable two-component epoxy adhesive composition according to the present invention in a quantity of from 20 to 40% by weight based on the total weight of the first part of the composition, preferably from 25 to 35%, and more preferably from 28 to 32%.

The toughener may be present in the second part of the thermally debondable two-component epoxy adhesive composition according to the present invention in a quantity of from 20 to 40% by weight based on the total weight of the second part of the composition, preferably from 25 to 35%, and more preferably from 28 to 32%.

These quantities are preferred because they provide adequate toughening without adversary effecting other properties, especially too high quantities may decrease debonding properties.

The first part of the thermally debondable two-component epoxy adhesive composition according to the present invention may further comprise an adhesion promoter. An adhesion promoter may be added to the composition to improve the adhesion of the epoxy resin to a substrate. Adhesion promoters may function by forming a new layer at the interface which binds strongly to both the substrate and the coating. The resultant interfacial region may also be more resistant to chemical attack from the environment.

The selection of adhesion promoter may be determined by the type of surface to which the composition will be applied. That said, the most common commercial adhesion promoters are organosilanes, such as epoxy functional organosilanes. Suitable organosilanes for use in the present invention is but not limited to glycidoypropyltrimethoxy silane. Further types of adhesion promoter which may find utility herein include: organometallic compounds such as titanates and zirconates, of which specific examples include isopropyl tri(N-ethylaminoethylamino)titanate, tetraisopropyl di(dioctylphosphito)titanate, neoalkoxytrisneodecanoyl zirconate and zirconium propionate; dihydric phenolic compounds such as catechol and thiodiphenol; hydroxyl amines such as tris(hydroxymethyl) aminomethane; polyhydric phenols such as pyrogallol, gallic acid, or tannic acid; and, plastisols, which are suspensions of polyvinyl chloride particles in a plasticizer.

Suitable commercially available adhesion promoter for use in the present invention include but is not limited to Dynasylan GLYMO from Evonik.

The adhesion promoter may be present in the thermally debondable two-component epoxy adhesive composition according to the present invention in a quantity of from 0.1 to 5% by weight based on the total weight of the first part of the composition, preferably from 0.2 to 3%, and more preferably from 0.3 to 1.5%.

The above defined and preferred adhesion promoter quantities may be ideal to provide adequate boost to an adhesion strength without adversely affecting to other properties.

The thermally debondable two-component epoxy adhesive composition according to the present invention may further comprise a pigment.

The pigment may be present in the first part of the composition and/or the second part of the composition and may be the same or different in the first part and the second part of the composition.

Suitable pigment may be selected from the group consisting of titanium dioxide, carbon black, graphite, iron oxide, organic pigments like phthalocyanides and mixtures thereof, preferably the pigment is selected from the group consisting of titanium dioxide, carbon black, iron oxide, and mixtures thereof, more preferably the pigment is carbon black.

Suitable commercially available pigments for use in the present invention include but are not limited to Printex U powder from Orion and Monarch 460 from Cabot.

The pigment may be present in the first part of the thermally debondable two-component epoxy adhesive composition according to the present invention in a quantity of from 0.01 to 1% by weight based on the total weight of the first part of the composition, preferably from 0.02 to 0.5%, and more preferably from 0.05 to 0.2%.

The pigment may be present in the second part of the thermally debondable two-component epoxy adhesive composition according to the present invention in a quantity of from 0.01 to 1% by weight based on the total weight of the second part of the composition, preferably from 0.02 to 0.5%, and more preferably from 0.05 to 0.2%.

The second part of the thermally debondable two-component epoxy adhesive composition comprises a mixture of three or more curing agents.

In a highly preferred embodiment, the second part of the thermally debondable two-component epoxy adhesive composition according to the present invention comprises a mixture of three curing agents.

The curing agent necessarily consists of at least one compound possessing at least two epoxide reactive groups per molecule. Curing agents may, in particular, include one or more of: i) at least one polyamine having at least two amine hydrogens reactive toward epoxide groups; ii) at least one tertiary polyamide compound having at least two amine hydrogens reactive toward epoxide groups; groups; iii) at least one poly(amidoamine) compound having at least two amine hydrogens reactive toward epoxide; and iv) at least one polyetheramine compound having at least two amine hydrogens reactive toward epoxide.

Suitable commercially available curing agents for use in the present invention include but are not limited to DEH 1502 from Olin Epoxy, Jeffamine D230 and Jeffamine THF170 from Huntsman, by Huntsman, Ancamine 2264 from Evonik.

The mixture of three or more curing agents may be present in the second part of the composition in an amount from 30 to 70% by weight based on the total weight of the second part of the composition, preferably from 40 to 60% and more preferably from 47 to 57%.

The above-mentioned quantity range is based on the quantity of the epoxy resin in the first part of the composition and is preferred because it may lead to a complete reaction, without unreacted epoxy resin present in the composition.

The second part of the thermally debondable two-component epoxy adhesive composition comprises an accelerator.

Suitable accelerator may be selected from the group consisting of tertiary amines, quaternary ammonium salts, amidines, guanidines and mixtures thereof.

Preferably the accelerator is modified polyamide.

The accelerator may present in the second part of the composition in an amount of from 25 to 60% by weight of the total weight of the second part of the composition, preferably from 35 to 55%, more preferably from 40 to 50%.

These quantities preferred because they provide required mechanical properties to the composition.

The second part of the thermally debondable two-component epoxy adhesive composition comprises a catalyst.

Preferably the catalyst is selected from the group consisting of 1 ,3-bis[3-(dimethylamino)propyl] urea, bis(1,2,2,6,6-pentamethyl-4-piperidyl) sebacate, N-phenyl-3,s-diethyl-1,2-dihydropyrin, 2-[4-dimethylamino)-phenyl]-ethanol, N,N-dimethyl-p-toluidine, N-phenyl-3,s-diethyl-1,2-dihydropyridine, 2-[4-(dimethylamino)-phenyl]-ethanol, N,N-dimethyl-p-toluidine, 1-acetyl-2-phenylhydrazine, 2-(dimethylamino)ethyl methacrylate, N-[3-(dimethylamino)propyl]acrylamide, N-butyldiethanolamine, N,N-Bis-hydroxyethyl-p-toluidine, 2,2-(4-methylphenylimino)diethanol, and mixtures thereof, preferably the catalyst is 1,3-bis[3-(dimethylamino)propyl] urea.

Suitable commercially available catalyst for use in the present invention include but is not limited to DAH from Trigon Chemie.

The catalyst may be present in the second part of the composition in an amount of from 1 to 10% by weight of the total weight of the second part of the composition, preferably from 1.5 to 8%, more preferably from 2 to 6%.

These quantities are preferred because they provide ideal mechanical properties and crosslinking density.

The thermally debondable two-component epoxy adhesive composition of the present invention is characterized by the presence of fillers in both parts thereof. The composition of the filler in each part is independently determined and, as such, may be the same or different for each part.

Broadly, there is no particular intention to limit the shape of the particles employed particles that are acicular, spherical, ellipsoidal, cylindrical, bead-like, cubic or platelet-like may be used alone or in combination. Moreover, it is envisaged that agglomerates of more than one particle type may be used.

Suitable filler may be selected from the group consisting of calcium carbonate, calcium oxide, calcium hydroxide (lime powder), precipitated and/or pyrogenic silicic acid, zeolites, bentonites, wollastonite, magnesium carbonate, diatomite, barium sulphate, alumina, clay, talc, sand, quartz, flint, mica, glass beads, glass powder, paramagnetic nanoparticles, alumina based thermally conductive fillers, fumed silica, and other ground mineral substances. Short fibres such as glass fibres, glass filament, polyacrylonitrile, carbon fibres, or polyethylene fibres can also be added.

The pyrogenic and/or precipitated silicic acids advantageously have a BET surface area from 10 to 90 m²/g. When they are used, they do not cause any additional increase in the viscosity of the composition according to the present invention but do contribute to strengthening the cured composition.

It is likewise conceivable to use pyrogenic and/or precipitated silicic acids having a higher BET surface area, advantageously from 100 to 250 m²/g as a filler: because of the greater BET surface area, the effect of strengthening the cured composition is achieved with a smaller proportion by weight of silicic acid.

Also, suitable as non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less, more preferably from 100 to 200 µm.

Non-conductive fillers which impart thixotropy to the composition may be preferred for many applications: such fillers are also described as rheological adjuvants, e.g. hydrogenated castor oil, fatty acid amides, or swellable plastics such as PVC.

In a highly preferred embodiment, the filler is the same in the first part and the second part and is a mixture of talc and fumed silica.

The filler may be present in the first part of the composition in an amount of from 1 to 10% by weight of the total weight of the first part of the composition, preferably from 2 to 9%, more preferably from 3 to 8%.

The filler may be present in the second part of the composition in an amount of from 1 to 10% by weight of the total weight of the second part of the composition, preferably from 2 to 9%, more preferably from 3 to 8%.

The above defined quantities are preferred because too low levels, mainly below 1%, may negatively impact the adhesives failure mode, whereas too high quantities, mainly more than 10% may lead to too high viscosities.

The first part of the thermally debondable two-component epoxy adhesive composition according to the present invention may further comprise a plasticiser. The plasticiser improves flexibility of the composition according to the present invention.

The plasticizer may be selected from the group consisting of ethers of monofunctional, linear or branched C4-C16 alcohols; esters of abietic acid, butyric acid, thiobutyric acid, and propionic acid esters; esters based on nitrocellulose and polyvinyl acetate; dicarboxylic acid esters; glycolic acid esters; benzoic acid esters; phosphoric acid esters; sulfonic acid esters; trimellitic acid esters; endcapped polyethylene, polypropylene glycols, bifunctional polyether polyol, and mixtures thereof, preferably the plasticiser is bifunctional polyether polyol.

Suitable commercially available plasticiser for use in the present invention include but are not limited to Lupranol 1000/1 from BASF, Caradol ED 56-300 from Shell, Arcol PPG 2000 from Covestro, Voranol 2000 L from DOW and Jeffol PPG 2000 from Huntsman.

The plasticiser may be present in an amount from 1 to 20% by weight of the total weight of the first part of the composition, preferably from 2 to 10%, and more preferably from 2.5 to 7%.

These quantities are preferred because too low quantities, less than 1%, may not have a technical effect, whereas too high quantities, more than 20%, may lead to decreased adhesion properties and initial strength of the bonded structure.

The present invention relates to a cured thermally debondable two-part epoxy composition according to the present invention.

The composition according to the present can be cured in about 10 to 120 minutes at a temperature within the range of about 50°C to about 90°C. When cured, the cured product exhibits a good adhesion.

The present invention relates to use of thermally debondable two-part epoxy composition according or cured product according to the present invention in a bonded structure.

The present invention relates to a bonded structure comprising: a first substrate; a second substrate; a thermally debondable two-part epoxy composition layer or cured product layer according to the present invention; and an adhesive layer, wherein the thermally debondable two-part epoxy composition is disposed on a surface of the first substrate and/or on a surface of the second substrate and wherein the adhesive layer is placed on top of the thermally debondable two-part epoxy composition layer, wherein the adhesive layer is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

The first and second substrates can be same or different and not limited to any particular substrate material. However, suitable substrate should have a temperature stability below debonding temperature and melting point above 100°C.

Suitable substrates for use in the present invention are, but not limited to aluminium, aluminium alloys, e-coated steel, and PET coated aluminium.

The adhesive layer of the bonded structure according to the present invention may be formed from any kind of adhesive suitable to adhere selected substrates. Suitable adhesive may be one component (1k) composition or a two component (2k) composition. Suitable adhesive may be selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

Suitable commercially available adhesives for use in the present invention include but are not limited to Teroson EP 5065, LOCTITE TLB9150APS and Teroson MS 939 from Henkel AG & Co. KGaA.

Examples of bonded structures are automotive components such as a battery, a casque and interior parts. Specific, non-limiting examples of e-mobility components are a battery lid, battery cells (cell-to-cell, cell-to-module, cell-to-body), battery modules, inverter, converter, and various structural adhesive applications and various thermally conductive applications.

The present invention relates to method of debonding said bonded structure according to the present invention the method comprising the steps of: i) applying a heat; and, ii) debonding the surfaces, wherein the temperature applied in step i) is preferably from 60 to 200°C, more preferably from 100 to 180 °C, and even more preferably from 130 to 160°C, and it is preferably applied preferably for a duration of from 7 seconds to 60 minutes.

The heat source may be a thermal source, a sonication probe or an electromagnetic source.

### Examples

The examples described hereunder exemplify the properties of the compositions according to the embodiments of the present invention. Unless otherwise indicated, all parts and percentages in following examples, as well as throughout the description, are parts by weight or percentages by weight respectively. The following examples are included for purposes of illustration so that the disclosure may be more readily understood and are in no way to be intended to limit the scope of the disclosure unless otherwise specifically indicated.
Structural epoxy adhesive Teroson EP5065 from Henkel
Sealant modified silane based Teroson MS939 from Henkel
Polyurethane two component adhesive Loctite UK 2073/2173 from Henkel
Expancel 031DU40 from Nouryon
Rubber spacer (d= 1.6 mm)
Isopropanol (iPrOH)
Bonderite M-NT 1455 W wipes from Henkel

### Substrates:

E-coated steel (Rocholl KTL Stahlprüfkörper) having the following dimensions 100 mm x 25 mm x 1.8mm

Aluminium 3003 (Al3003, Rocholl Aluminiumprüfkörper) having the following dimensions 100 mm x 25 mm x 2.0mm

Aluminium 3003 manually wrapped in PET adhesive foil (Al3003/PET) having the following dimensions 100 mm x 25 mm x 2.2mm

Polypropylene substrates - PP (InnoTech, PRÜF10106PP) having the following dimensions 100 mm x 25 mm x 3.0mm.

Tensile lap shear strength was measured according to DIN EN 1465:2009-07.

The substrates were pretreated as follows:
The substrates were rubbed with a piece of paper soaked with iPrOH and let dry.

For Al3003 an additional wiping step using Bonderite M-NT 1455 W Wipes was carried out to create a good adhesive base for debondable layer coating.

The PP substrates were first rubbed with a piece of paper soaked in iPrOH, and later the substrates were flamed using a flaming machine with a speed of 48 m/min and a flame distance of 6 cm.

The Al3003 wrapped in PET were first rubbed with a piece of paper soaked in iPrOH, and later plasma pretreated using atmospheric plasma at distance of 16mm.

Thermally debondable two-component epoxy adhesive composition according to the present invention and comparative examples were prepared in accordance with Tables 1 and 2 herein below.

Parts A and B were mixed according to the desired part A:B ratio in a speedmixer cup for 15 seconds at 1500 rpm.

**Table 1**

| First part | | |
|---|---|---|
| | Example 1 | Comparative example |
| Material | Wt. % | |
| Core shell rubber in Bisphenol-A resin from Kaneka | 29,6 | 52.2 |
| 1,4-Butanediol diglycidyl ether from BASF | 12.8 | 10.4 |
| Glycidoxypropyltrimethoxysilane from Evonik | 1.2 | 1.0 |
| Carbon black pigment from Orion | 0.1 | 0.1 |
| Talc filler from Imerys | 4.8 | 3.9 |
| Fumed silica from Cabot | 1.0 | 1.4 |
| Cardanol mono-functional epoxy from Cardolite | 16.9 | |
| bifunctional polyether polyol from BASF | | 3.4 |
| Expandible microspheres from Nouryon | 33.8 | 27.6 |

**Table 2**

| Second part | | |
|---|---|---|
| | Example 1 | Comparative example |
| Material | Wt. % | |
| Polycycloaliphatic polyamine from Evonik | 17.63 | |
| Polyoxy propylene diamine from Huntsman | | 12.9 |
| Cycloaliphatic and aromatic amine crosslinker from Evonik | | 30.6 |
| Modified polyamide hardener from Olin | 46.63 | 18.2 |
| Polyetheramine from Huntsman | 23.4 | 27.7 |
| Silica from Wacker | 2.94 | 3.2 |
| 1,3-bis[3-(dimethylamino)propyl] urea from Trigin Chemie GmbH | 3.49 | 4.8 |
| Talc filler from Imerys | 4.66 | 2.6 |
| Amine-terminated butadiene-acrylonitrile copolymer from Huntsman | 1.25 | |

### Substrate preparation for Lap Shear measurements

After pretreatment of the substrates as described above, the substrates were assembled using the following procedure.

Half of the substrates were bar-coated with formula according to example 1 or comparative example depending on the final thickness that was wanted. The coated substrates were cured using an oven at 60 °C for 2 hours. Once the samples were cured, the coating thickness resulted to be between 100 - 200 µm depending on the experiment.

Before applying the adhesive, rubber spacers of 1.6mm were applied on the top of the layer of formula 1 with 10 mm between each spacer. This is necessary to provide an even thickness bondline.

The adhesive (TEROSON EP5065 or Loctite UK 2073/2173) was applied in between the rubber spacer with a total bondline area of 2.5 cm x 1 cm using a manual cartridge pusher through a static mixer.

A second substrate (not coated and cleaned), was mounted and faced with the first substrate containing the adhesive. After removal of the excess adhesive, it was clamped to ensure a good adhesion of the adhesive on the top of the surface.

Once the procedure was repeated for all the substrates, the substrates were cured as follows: TEROSON EP5065 - 2h at 60°C and Loctite UK2073/2173 - 3 days at room temperature.

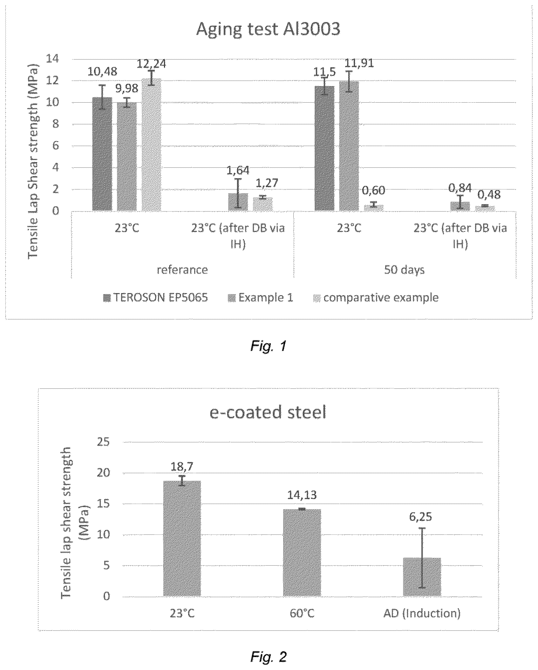

Tensile lap shear strength of the composition according to the present invention in combination with TEROSON EP5065 on Al3003 after 50 days of aging
The samples were prepared as described above and stored in a climate chamber for 50 days. In the climate chamber, the samples were exposed to 100 cycles in which the temperature was changing from -40°C to 80°C, and the relative humidity was changing from 30% to 80% according to the automotive industry test method PV1200. These conditions were used to fast the aging of the samples to simulate a thermal and humidity stress over a period over 15 years. The composition according to the present invention (example 1) was compared with the older generation formulation (comparative example). Figure 1 illustrates that the lap shear strength of TEROSON EP5065 after the 50 days in the climate chamber remained the same. When the same test was carried on the specimens of TEROSON EP5065 in combination with the comparative example, the lap shear strength before debonding decreased 95%. However, with the formulation according to the present invention (example 1) the lap shear strength remained unchanged before and after the thermal cycles, and the debonding process maintained its efficiency without any decrease. These results are illustrated in Figure 1.

Tensile Lap Shear Strength of TEROSON EP5065 and example 1 on e-coated steel
The lap shear strength of TEROSON EP5065 in combination with the example 1 layer was measured using e-coated steel (KTL) as substrates, before and after debonding, and at 60 °C. For this experiment a thickens of the composition according to the present invention of 157 ± 35 µm was used. Debonding of the specimens were carried out using Induction Heating. The results are illustrated in Figure 2, with a debonding efficiency of at least 65%, up to 85%.

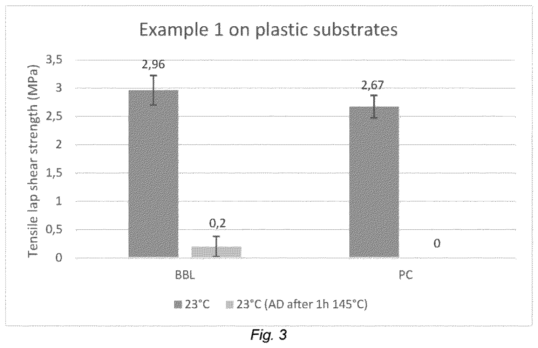

Tensile shear strength of LOCTITE UK2073/2173 in combination with example 1 on plastic substrates (Bayblend XF 901510)
The Lap Shear Strength of LOCTITE UK2073/2173 in combination with the example 1 layer on different plastic substrates was measured. As illustrated in Figure 3, the debonding process, carried out keeping the samples in an oven at 145°C for 1 h, had a debonding efficiency above 99%. These results illustrated that the composition according to the present invention (example 1) layer had a great adhesion on plastic substrates and, once it is exposed to the trigging temperature a good debonding was observed.

## Claims

1. A thermally debondable two-component epoxy adhesive composition comprising
a first part comprising
an epoxy resin;
a mixture of two or more reactive diluents; and
thermally expandable thermoplastic microspheres;
and
a second part comprising
a mixture of three or more curing agents consisting of at least one compound possessing at least two epoxide reactive groups per molecule;
an accelerator; and,
a catalyst,
wherein the first part and the second part are mixed in epoxy:NH₂ equivalent ratio of from 0.95:1 to 1:0.95.

2. The thermally debondable two-component epoxy adhesive composition according to claim 1, wherein the epoxy resin is selected from the group consisting of bis-phenol A epoxy resin, bis-phenol F epoxy resin, mixture of bis-phenol A epoxy resin and bis-phenol F epoxy resin, cycloaliphatic epoxy resin and mixtures thereof, preferably said epoxy resin is bis-phenol A epoxy resin.

3. The thermally debondable two-component epoxy adhesive composition according to claim 1 or 2, wherein the epoxy resin is present in an amount from 5 to 40% by weight of the total weight of the first part of the composition, preferably from 6 to 30%, and more preferably from 7 to 20%.

4. The thermally debondable two-component epoxy adhesive composition according to any one of claims 1 to 3, wherein the reactive diluent is selected from the group consisting of 2-{3-[(8E,11E)-pentadeca-8,11-dien-1-yl]phenoxymethyl}oxirane, glycidyl ether, cresyl glycidyl ether, polyethylene glycol glycidyl ether, polypropylene glycol glycidyl ether, butyl glycidyl ether, 2,2,4-trimethylpentyl glycidyl ether, phenyl glycidyl ether, cyclohexanedimethanol glycidyl ether, p-t-butyl phenyl glycidyl ether, neopentyl glycol di-glycidyl ether, cyclohexanedimethanol glycidyl ether, 1,4-butanediol diglycidyl ether, cardolite, C12-C14 alcohol glycidyl ether, and mixtures thereof, preferable the reactive diluent is a mixture of 2-{3-[(8E,11E)-pentadeca-8,11-dien-1-yl]phenoxymethyl}oxirane and 1,4-butanediol diglycidyl ether.

5. The thermally debondable two-component epoxy adhesive composition according to any one of claims 1 to 4, wherein the reactive diluent is present in an amount from 8 to 25% by weight of the total weight of the first part of the composition, preferably from 10 to 23%, and more preferably from 12 to 22%.

6. The thermally debondable two-component epoxy adhesive composition according to any one of claims 1 to 5, wherein the thermally expandable thermoplastic microspheres have a core-shell structure, and wherein the shell is formed from cross-linked polymer and the core is composed of a blowing agent.

7. The thermally debondable two-component epoxy adhesive composition according to any one of claims 1 to 6, wherein the thermally expandable thermoplastic microspheres expand when exposed to a heat, preferably exposed to a heat of from 60 to 200°C, preferably from 100 to 180 °C, and more preferably from 130 to 160°C.

8. The thermally debondable two-component epoxy adhesive composition according to any one of claims 1 to 7, wherein the thermally expandable thermoplastic microspheres are present from 15 to 40% by weight based on the total weight of the first part of the composition, preferably from 20 to 35% and more preferably from 24 to 32%.

9. The thermally debondable two-component epoxy adhesive composition according to any one of claims 1 to 8, wherein at least three curing agents are present in an amount from 30 to 70% by weight based on the total weight of the second part of the composition, preferably from 40 to 60% and more preferably from 47 to 57%.

10. The thermally debondable two-component epoxy adhesive composition according to any one of claims 1 to 9, wherein the accelerator is present in an amount of from 25 to 60% by weight of the total weight of the second part, preferably from 35 to 55%, more preferably from 40 to 50%.

11. The thermally debondable two-component epoxy adhesive composition according to any one of claims 1 to 10, wherein the catalyst is present in an amount of from 1 to 10% by weight of the total weight of the second part, preferably from 1.5 to 8%, more preferably from 2 to 6%.

12. Cured thermally debondable two-part epoxy composition according to any one of claims 1 to 11.

13. Use of thermally debondable two-part epoxy composition according to any one of claims 1 to 11 or cured product according to claim 12 in a bonded structure.

14. A bonded structure comprising:
a first substrate;
a second substrate;
a thermally debondable two-part epoxy composition layer according to any one of claims 1 to 11 or cured product layer according to claim 12; and
an adhesive layer,
wherein the thermally debondable two-part epoxy composition is disposed on a surface of the first substrate and/or on a surface of the second substrate and wherein the adhesive layer is placed on top of the thermally debondable two-part epoxy composition layer, wherein the adhesive layer is preferably formed from an adhesive selected from the group consisting of epoxy adhesives, acrylic adhesive, polyurethane adhesive, cyanoacrylate adhesives, silicone adhesive, polyimide adhesives, silane modified polymers, butyls, hotmelts and mixtures thereof.

15. A method of debonding said bonded structure according to claim 14, the method comprising the steps of:
i) applying a heat; and,
ii) debonding the surfaces,
wherein the temperature applied in step i) is preferably from 60 to 200°C, more preferably from 100 to 180 °C, and even more preferably from 130 to 160°C, and it is preferably applied for a duration of from 7 seconds to 60 minutes.
